(19) Europäisches Patentamt
European Patent Office
Office européen des brevets

(11) Veröffentlichungsnummer: **0 365 792 B1**

(12) **EUROPÄISCHE PATENTSCHRIFT**

(45) Veröffentlichungstag der Patentschrift: **26.01.94**

(51) Int. Cl.[5]: **C08F 2/42**

(21) Anmeldenummer: **89116237.2**

(22) Anmeldetag: **02.09.89**

# (54) Verfahren zum Desaktivieren von Radikalen.

(30) Priorität: **28.10.88 DE 3836777**

(43) Veröffentlichungstag der Anmeldung:
**02.05.90 Patentblatt 90/18**

(45) Bekanntmachung des Hinweises auf die Patenterteilung:
**26.01.94 Patentblatt 94/04**

(84) Benannte Vertragsstaaten:
**DE FR GB IT NL**

(56) Entgegenhaltungen:
**EP-A- 0 200 181**
**US-A- 3 060 158**

(73) Patentinhaber: **BUNAWERKE HÜLS GMBH**
**Postfach 1320**
**D-45743 Marl(DE)**

(72) Erfinder: **Hörpel, Gerhard, Dr.**
**Lerchenhain 84**
**D-4405 Nottuln(DE)**
Erfinder: **Pangratz, Joachim**
**In der Furge 22**
**D-4270 Dorsten 11(DE)**

**EP 0 365 792 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Desaktivieren von Radikalen, die vor oder während der radikalischen Polymerisation von Dienen und/oder vinylaromatischen Verbindungen und gegebenenfalls weiteren Monomeren entstehen.

Bei der radikalischen Polymerisation von Butadien in Emulsion tritt bei höheren Umsätzen vorzeitige Vergelung auf. Um diesen für die Eigenschaften des erhaltenen Kautschukes nachteiligen Effekt zu unterbinden, ist es notwendig, die Polymerisation vor Beendigung der Reaktion abzustoppen. Auch bei anderen radikalischen Polymerisationen ist es oft wünschenswert, die Reaktion abzubrechen. Als Stopper wurden in der Vergangenheit Alkali- oder Ammoniumdialkyldithiocarbamate - vielfach in Kombination mit anderen Polymerisationsinhibitoren - eingesetzt (vgl. z. B. Houben-Weyl, Methoden der organischen Chemie, Bd. 14, S. 433 ff.). So läßt sich die Abstoffwirkung von Natriumdimethyldithiocarbamat erheblich verbessern, wenn man gleichzeitig Natriumnitrit zusetzten. Ein erheblicher Nachteil der Verwendung von Dithiocarbamaten liegt jedoch darin, daß im Verlaufe der sauren Latexaufarbeitung Nitrosamine gebildet werden, die nach heutiger Erkenntnis als Gesundheitsrisiko angesehen werden müssen (vgl. Umschau 1985 (1), 24). Dieses Risiko ist noch verstärkt, wenn gleichzeitig Natriumnitrit eingesetzt wird. Man ist daher bemüht, Reaktionsbedingungen zu wählen, die die Möglichkeit des Entstehens von Nitrosaminen von vornherein ausschließen (vgl. Gummi, Asbest, Kunststoffe 39, 6 (1986). Ein ähnliches Problem stellt sich, wenn die unerwünschte Polymerisation von radikalbildenden Monomeren inhibiert werden soll. Auch zu diesem Zweck werden nach dem Stand der Technik vielfach cancerogene Substanzen in teilweise beträchtlichen Mengen eingesetzt.

Aminfreie Polymerisationsinhibitoren sind im Prinzip bekannt. Eine Zusammenfassung findet sich z. B. in dem soeben zitierten Standardwerk Houben-Weyl. Diese Inhibitoren haben jedoch den generellen Nachteil, daß die Vulkanisationsgeschwindigkeiten der erhaltenen Kautschuke deutlich niedriger sind als die entsprechender Kautschuke, die mit Dimethyldithiocarbamat gestoppt wurden (vgl. US-PS 3 222 334).

Ziel der vorliegenden Erfindung war es somit, ein Verfahren zum Desaktivieren von Radikalen, die vor oder während der radikalischen Polymerisation entstehen, aufzufinden, das einerseits das Entstehen gesundheitsgefährdender Nitrosamine ausschließt und bei dem andererseits die Vulkanisation nicht beeinträchtigt wird.

Es wurde jetzt ein solches Verfahren gefunden. Dieses besteht darin, daß man der Reaktionsmischung zum Zeitpunkt des gewünschten Polymerisationabbruches eine wirksame Menge einer aromatischen Hydroxydithiocarbonsäure bzw. deren Salz der allgemeinen Formel

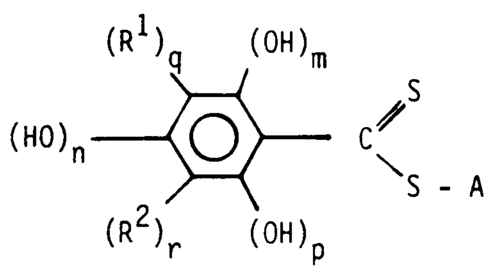

zusetzt.

n, m, p, q und r haben die Bedeutung von 0 oder 1 mit der Einschränkung, daß die Summe n + m + p mindestens den Wert 1 haben muß.

$R^1$ und $R^2$ sind gleiche oder unterschiedliche Reste folgender Bedeutung

- Alkylrest mit 1 bis 10 C-Atomen
- Alkenylrest mit 1 bis 10 C-Atomen
- Aralkylrest mit bis zu 15 C-Atomen

A hat die Bedeutung von Wasserstoff, Ammonium oder vorzugsweise Alkali.

Das erfindungsgemäße Verfahren wird vor allem bei der radikalischen Polymerisation in wäßriger Emulsion angewandt.

Bevorzugt sind Monomermischungen aus Styrol und Butadien. Bevorzugte Ausführungsformen sind in den Patentansprüchen beschrieben. Als Kettenabbruchmittel wird vorzugsweise ein Natriumhydroxydithiocarboxylat der Formel

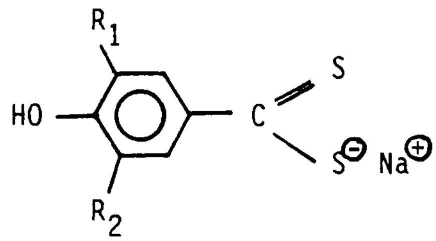

mit $R_1 = R_2$ = Alkyl, insbesondere t-Butyl, eingesetzt. Das Abbruchmittel wird vorzugsweise in Form einer 1 bis 10 %igen wäßrigen Lösung eingesetzt.

Die erfindungsgemäßen Dithiocarbonsäuren enthalten keine Aminstruktur. Somit ist die Bildung von Nitrosaminen ausgeschlossen. Sie bewirken nicht nur eine sofortige und vollständige Inhibierung der Polymerisation, sondern garantieren auch Vulkanisations- oder Vulkanisateigenschaften, die mit den Eigenschaften entsprechender Dithiocarbamat-gestoppter Kautschuke vergleichbar sind. Die erfindungsgemäß eingesetzten Hydroxydithiocarbonsäuren und deren Derivate sind in wesentlich geringeren Konzentrationen wirksam als herkömmliche Abbruchmittel (vgl. Beispiel 1.1 und Vergleichsbeispiel C in Tabelle 2).

Die Darstellung der erfindungsgemäß verwendeten Dithiocarbonsäuren und ihrer Salze erfolgt üblicherweise durch Dithiocarboxylierung der entsprechenden Phenole in Dimethylformamid oder in Alkoholen. Ein geeignetes Dithiocarboxylierungsmittel ist ein Gemisch aus Schwefelkohlenstoff und Kaliumhydroxyd, ferner Kaliumdithiocarbonat oder Kaliumtrithiocarbonat (siehe Scheithauer, R. Mayer, in A. Senning: Topics in Sulfur Chemistry, Thio- and Dithiocarboxylic Acids and Their Derivatives, Vol. 4, Georg Thieme Verlag, Stuttgart, 1979). Das erfindungsgemäße Verfahren ist allgemein bei radikalischen Polymerisationen anwendbar. Im Hinblick auf die erwünschte Stopperwirkung ist es unerheblich, ob die Polymerisation in Batch-Fahrweise oder im Zulaufverfahren erfolgt.

Bei der Polymerisation können die für die Herstellung synthetischer Kautschuke typischen Monomeren bzw. Monomermischungen eingesetzt werden, also etwa Diene, gegebenenfalls im Gemisch mit copolymerisierbaren Monoolefinen. Geeignete Diene sind Isopren, Chloropren, Cyanobutadien-(1,3), 2-Phenylbutadien, Piperylen, 2,3-Dimethylbutadien-(1,3) und insbesondere Butadien-1,3. Geeignete copolymerisierbare Monoolefine sind Vinylverbindungen, die durch mindestens eine elektronegative Gruppe substituiert sind, also beispielsweise aromatische Vinylverbindungen wie Styrol, Vinylnaphthalin, Alpha-Methylstyrol, p-Chlorstyrol, ferner Acrylsäure, Methacrylsäure, Acrylnitril, Acrylamide, Methacrylamide, Acrylate, Methacrylate u. a.

Die im Falle der Emulsionspolymerisation verwendeten Emulgatoren sind z. B. Alkaliseifen von gegebenenfalls (de)hydrierten Fettsäuren oder Abietinsäure. Es können aber auch andere bei der Emulsionspolymerisation übliche Emulgatoren verwendet werden.

Als Polymerisationsstarter werden die bei der radikalischen Polymerisation üblichen Persulfate, Peroxide, Hydroperoxide oder Azoverbindungen eingesetzt, die darüberhinaus im Sinne einer Redoxinitiierung durch ein Reduktans aktiviert werden können.

Die Temperatur der Polymerisationsreaktion ist nicht kritisch. Sie liegt üblicherweise zwischen 0 °C und +90 °C. Das erfindungsgemäße Verfahren wird generell in der Weise ausgeführt, daß man den Polymerisationsanssatz mit dem Abbruchmittel in Kontakt bringt. Es hat sich als zweckmäßig erwiesen, das Abbruchmittel nicht als solches sondern in Form einer wäßrigen oder organischen Lösung einzusetzen. Wäßrige Emulsionen werden üblicherweise mit wäßrigen 1 bis 10 %igen Lösungen der Alkali- oder Ammoniumsalze der aromatischen Hydroxydithiocarbonsäuren gestoppt. Wird das Abbruchmittel in zu konzentrierter Form eingesetzt, kann es zu unerwünschten Koagulationstendenzen kommen.

Die aromatischen Hydroxydithiocarbonsäuren können auch in Form organischer Lösungen eingesetzt werden und eignen sich dann sowohl zum Stoppen von Polymerisaten in wäßriger Emulsion als auch in organischer Lösung. Man löst die aromatische Hydroxydithiocarbonsäure in der 0,5- bis 9-fachen Volumenmenge eines organischen Lösemittels wie z. B. Toluol, Tetrahydrofuran oder Essigsäureethylester. Besonderes geeignet ist Styrol.

Die Abbruchmittel werden in einer solchen Menge eingesetzt, daß auf 100 Teile Monomer etwa 0,1 bis 1,0 Teile Hydroxydithiocarbonsäure oder deren Salze kommen.

Obwohl es grundsätzlich auch möglich ist, das Abbruchmittel dem Polymerisationsansatz zuzusetzen, wird doch die inverse Variante bevorzugt: Man legt das Abbruchmittel vor und setzt den Polymerisationsansatz zu.

Die aromatischen Hydroxydithiocarbonsäuren und deren Salze können auch zur Inhibierung der Polymerisation radikalbildender Monomerer eingesetzt werden. Monomere wie (Meth)Acrylate, Diene, Vinylester und Styrol neigen bekanntlich dazu, unter Einwirkung von Licht, Sauerstoff oder Wärme Radikale zu bilden und spontan zu polymerisieren. Zwar ist die Tendenz geringer, wenn diese Monomeren in einem inerten organischen Lösemittel vorliegen, doch selbst in solchen Lösungen kann es spontan zu radikalischen Polymerisationen kommen. Um dies zu verhindern, setzt man den Monomeren bzw. Monomerlösungen die aromatischen Hydroxydithiocarbonsäuren in Mengen von etwa 10 bis 1 000 ppm, bezogen auf das Monomere, zu.

## Experimenteller Teil

I. Allgemeine Beschreibung der Polymerisation

### Beispiel 1

Butadien-Styrol-Copolymerisat

Ein 12 l Polymerisationsautoklav wird mit den Edukten gemäß Tabelle 1 beschickt und danach bei 5 °C mit 150 Umdrehungen pro Minute (UpM) gerührt. Bei einem Umsatz von 60 % wird der Polymerisationsansatz mit einem der nachfolgend beschriebenen Abbruchmittel versetzt. Die Umsatzbestimmung erfolgt, indem man eine Probe zieht, diese mit Diethylhydroxylamin versetzt, die Lösung verdampft und den Polymeranteil gravimetrisch bestimmt. Nach 3 Stunden wird der Polymerisationsumsatz per Feststoffbestimmung ermittelt und dann auf 60 % Umsatz linear extrapoliert.

### Beispiel 2

Ein 40 l Polymerisationsautoklav wird mit den Edukten gemäß Tabelle 1 beschickt und auf 50 °C aufgeheizt. Die beginnende Polymerisation heizt den Ansatz auf eine Reaktionstemperatur von 80 °C, die gehalten wird, bis ein Umsatz von 60 % erreicht ist. Der Polymerisationsansatz wird mit einem der nachfolgend beschriebenen Abbruchmittel versetzt.

Tabelle 1: Polymerisationsrezepturen

| Polymerisationsansatz | Beispiel 1 | Beispiel 2 |
|---|---|---|
| Edukte | pphm 7) | pphm 7) |
| Butadien | 72 | 40 |
| Styrol | 28 | 60 |
| Acrylsäure | - | 5 |
| Wasser | 150 | 150 |
| Mersolat[R] K 30 o) | - | 0,5 |
| Natriumharzseife 1) | 4,9 | - |
| Polywachs 3000 2) | - | 0,004 |
| Natriumnaphthalinsulfonat-formaldehydkondensat 3) | 0,150 | - |
| Kaliumchlorid | 0,150 | - |
| EDTA 4) | 0,051 | 0,01 |
| Natriumhydroxid | 0,132 | - |
| Phosphorsäure | 0,066 | - |
| Schwefelsäure | 0,0018 | - |
| Natriumformaldehydsulfoxylat 5) | 0,051 | - |
| t-Dodecylmercaptan | 0,18 | 0,75 |
| Pinanhydroperoxid 6) | 0,044 | - |
| Ammoniumperoxodisulfat | - | 0,5 |

Erläuterungen zu Tabelle 1:

o) Kaliumsalz eines Paraffinsulfonates ($C_{16-18}$), das unter dem Namen Mersolat[R] K 30 als 39,5 %ige wäßrige Lösung von der Fa. Bayer AG, D-5090 Leverkusen vertrieben wird.

1) Es handelt sich um eine disproportionierte Abietinsäure (vgl. Beyer "Lehrburch der organischen Chemie", 8. Auflage, S. Hirzel Verlag, D-7000 Stuttgart, 1976, Seite 592), die unter dem Namen

DRESINATE® 731 von der Fa. Abieta, D-8900 Gersthofen vertrieben wird.

2) Es handelt sich um ein Polyethylenoxid MG = 3 000, das unter dem Namen Polyethylenglykol 3000 von der Fa. HÜLS AKTIENGESELLSCHAFT, D-4370 Marl hergestellt wird.

3) Es handelt sich um eine mit Formaldehyd kondensierte Naphthalinsulfonsäure, die unter dem Namen VULTAMOL® von der Fa. BASF AG, D-6700 Ludwigshafen vertrieben wird.

4) Ethylendiamintetraessigsäure

5) Natriumformaldehydsulfoxylat wird unter dem Namen BRÜGGOLIT® von der Fa. Brüggemann, D-7100 Heilbronn vertrieben.

6) Es handelt sich um ein Gemisch aus 1-, 2- und 5-Hydroperoxy-7-dimethyl-2-methyl-bicyclo[3.1.1]hexan, das als 54 %ige Lösung in Pinan von der Fa. Hoechst AG, D-6230 Frankfurt 80, vertrieben wird.

7) pphm = parts per hundred monomer

II. Abstoppung des nach Beispiel 1 erhaltenen Polymerisationsansatzes

Bei einem Umsatz von 60 % wird der Latex gemäß Beispiel 1 in einen Reaktor überführt, in dem das Abbruchmittel in gelöster Form vorliegt. Die Wirkung der Abbruchmittel wird anhand folgender Bestimmungen ermittelt:

1. Man ermittelt die Wirkung des Abbruchmittels unter thermischer Belastung, indem man
   a) den bei einem Umsatz von 60 % gestoppten Polymerisationsatz mit Diethylhydroxylamin im Überschuß versetzt, die restlichen Monomeren entfernt und das Polymerisat auswiegt und
   b) den bei einem Umsatz von 60 % gestoppten Polymerisationsansatz 8 Stunden bei 60 °C behandelt und dann - ebenso wie unter a) - die Monomeren entfernt und das Polymerisat auswiegt.

   Die Differenz der beiden gravimetrischen Bestimmungen, Delta FS, stellt ein Maß für die Stoppwirkung dar.
2. Eine weitere Methode zur Bestimmung der Stoppwirkung geht von der Messung des Mooney aus.
   a) Man bestimmt den Mooneywert $M_{vor}$ eines frisch abgestoppten Polymerisats bei einem Umsatz von 60 %.
   b) Man hält einen gemäß a) abgestoppten Polymerisationsansatz 8 Stunden bei 60 °C, entfernt die Monomeren und bestimmt den Mooneywert $M_{nach}$.
   c) Man läßt den thermisch belasteten und von Monomeren befreiten Polymerisationsansatz gemäß b) 1 Woche, 2 Wochen bzw. 3 Wochen stehen und ermittelt dann jeweils den Mooneywert.

Ein Latex wird bzgl. seiner Mooneyviskosität ($ML_{1+4}$) als stabil angesehen, wenn die Abweichung nicht mehr als 2 Mooneyeinheiten beträgt.

Erläuterung der verwendeten Abbruchmittel:

| | |
|---|---|
| DBCS-H : | 4-Hydroxy-3,5-di-t-butylbenzol-dithiocarbonsäure |
| DBCS: | Natriumsalz der 4-Hydroxy-3,5-di-t-butylbenzol-dithiocarbonsäure |
| BECS: | Natriumsalz der 4-Hydroxy-3,5-dibenzylbenzol-dithiocarbonsäure |
| DMCS: | Natriumsalz der 4-Hydroxy-3,5-dimethylbenzol-dithiocarbonsäure |
| TOCS: | Natriumsalz der 4-Methylbenzol-dithiocarbonsäure |
| DMC: | Natriumdimethyldithiocarbamat |
| DEHA: | Diethylhydroxylamin |

Tabelle 2: Wirkung verschiedener Polymerisationsabbruchmittel auf den Polymerisationsansatz gemäß Beispiel 1

| Beispiel | Abbruchmittel* | Menge pphm | Delta FS % | $M_{vor}$ | Latexlagerung $M_{nach}$ | $M_{1WO}$ | $M_{2WO}$ | $M_{3WO}$ | $M_{4WO}$ |
|---|---|---|---|---|---|---|---|---|---|
| A[1)] | TOCS | 0,451 | 3,6 | 55 | | | | | |
| 1.1 | DBCS | 0,050 | 0,3 | 36 | 35 | 35 | 35 | 36 | 35 |
| 1.2 | DBCS | 0,100 | 0,0 | 44 | 44 | 43 | 43 | 42 | 44 |
| 1.3 | DBCS-H | 0,100 | 0,0 | 57 | 54 | 53 | 55 | 54 | 53 |
| 1.4 | DBCS | 0,400 | 0,0 | 40 | 42 | 43 | 43 | 40 | 42 |
| 1.5 | DMCS | 0,193 | 0,0 | 50 | 50 | 48 | 48 | 47 | 49 |
| 1.6 | BECS | 0,200 | 0,3 | 48 | 46 | 47 | 47 | 47 | 47 |
| B | DMC | 0,190 | 1,2 | 59 | - | - | - | - | - |
| C | DMC | 0,300 | 0,8 | 48 | 49 | 50 | 51 | 54 | 53 |
| D | DMC | 0,393 | 0,3 | 51 | 50 | 52 | 51 | 51 | 52 |
| E | DMC/ $NaNO_2$ | 0,39/ 0,06 | 0,0 | 50 | 50 | 50 | 48 | 51 | 49 |
| F | DEHA | 0,080 | 0,2 | 47 | 48 | 47 | 49 | 51 | 56 |

Erläuterungen zur Tabelle 2:

| | |
|---|---|
| * | : Die Abbruchmittel werden mit einer Ausnahme als wäßrige Lösungen eingesetzt; lediglich in Beispiel 1.3 kam eine Lösung in Styrol zur Anwendung. |
| pphm | : parts per hundred monomer |
| Delta FS | : Feststoffanstieg in % nach thermischer Belastung als Maß für die Weiterpolymerisation |
| $M_{vor}$ | : Mooneyviskosität unmittelbar nach Stoppen der Polymerisation |
| $M_{nach}$ | : Mooneyviskosität nach thermischer Belastung und |

Entmonomerisierung

$M_{1WO,2WO,\ ...}$ : Mooneyviskositäten eines bei 60 °C gelagerten Latex nach 1 Woche, 2 Wochen, ...

1) Die Werte $M_{nach}$ und $M_{1WO,\ etc.}$ wurden nicht gemessen.

III. Abstoppung des nach Beispiel 2 erhaltenen Polymerisationsansatzes

Von dem Polymerisationsansatz wurden bei einem Umsatz von 60 % Proben in gasdichte Flaschen gezogen, die z. T. Abbruchmittel enthielten (siehe Tabelle 3). Die Proben wurden 3 Tage bei Raumtemperatur stehen gelassen und dann im Vergleich zu Kontrollproben, die kein Abbruchmittel enthielten, ausgewertet.

Tabelle 3

| Wirkung verschiedener Abbruchmittel auf den Polymerisationsansatz gemäß Beispiel 2 | | | |
|---|---|---|---|
| Beispiel | Abbruchmittel | Menge ppm | Delta FS % |
| G | - | - | 3,2 |
| H | - | - | 3,3 |
| 2.1 | DBCS-H | 0,6 | 0,0 |
| 2.2 | DBCS-H | 0,2 | 0,1 |
| I | DEHA | 0,3 | 0,7 |
| K | DEHA | 5,0 | 0,0 |

IV. Vulkanisation der abgestoppten Polymerisate gemäß Beispiel 1

Nach Polymerisationsabbruch wird der gemäß Beispiel 1 erhaltene und von restlichen Monomeren befreite Latex nach der Elektrolytfällmethode aufgearbeitet (s. Houben-Weyl, Band 14/1, Seite 480) und der isolierte entstehende Kautschuk in nachfolgender Rezeptur bei 50 °C gewalzt und bei 160 °C vulkanisiert.

| | |
|---|---|
| Kautschuk | 100 phr (parts per hundred rubber) |
| CORAX$^R$ N 330 | 50 phr |
| Zinkoxid | 3 phr |
| Stearinsäure | 1 phr |
| VULKAZIT$^R$ NZ | 1 phr |
| Schwefel | 1,75 phr |

CORAX$^R$ N 330 ist ein Ruß, der von der Degussa AG, D-6450 Hanau vertrieben wird.

VULKAZIT$^R$ NZ ist ein Vulkanisationsmittel mit der chemischen Bezeichnung Benzothiozyl-2-tert-butylsulfenamid, das von der Fa. Bayer AG, D-5090 Leverkusen, vertrieben wird.

Tabelle 4: Vulkanisations- und Vulkanisateigenschaften der abgestoppten Polymerisate

| Beispiel | $M_R$ | $M_{Mi}$ | $t_{10}$ Min. | Delta t Min. | Heiz Min. | F MPa | D % | Modul 200 | Modul 300 | H | E % |
|---|---|---|---|---|---|---|---|---|---|---|---|
| 1.4 | 44 | 81 | 4,1 | 10,1 | 30 | 21,4 | 367 | 8,5 | 16,3 | 70 | 46 |
| | | | | | 45 | 20,9 | 351 | 8,8 | 16,7 | 69 | 47 |
| 1.2 | 46 | 83 | 4,7 | 11,1 | 30 | 24,9 | 429 | 8,3 | 15,7 | 69 | 46 |
| | | | | | 45 | 25,6 | 435 | 8,5 | 16,2 | 70 | 46 |
| E | 52 | 86 | 4,9 | 10,2 | 30 | 25,7 | 423 | 8,5 | 16,3 | 70 | 47 |
| | | | | | 45 | 24,2 | 389 | 9,1 | 17,2 | 70 | 47 |
| D | 61 | 86 | 5,0 | 12,6 | 30 | 23,8 | 395 | 8,5 | 16,6 | 68 | 42 |
| | | | | | 45 | 26,1 | 398 | 9,6 | 18,2 | 69 | 42 |
| F | 51 | 86 | 4,8 | 11,8 | 30 | 21,7 | 371 | 8,3 | 15,5 | 70 | 46 |
| | | | | | 45 | 17,5 | 310 | 8,6 | 16,7 | 70 | 46 |

Erläuterungen zur Tabelle 4:

$M_R$ : Rohmooney, Mooneywert des reinen Kautschukfelles gemäß ASTM D 1646

$M_{Mi}$ : Mooneywert des Vulkanisates

$t_{10}$ : Zeit in Minuten, bei der der Kautschuk zu 10 % vulkanisiert ist, Vulkametrie gemäß DIN 53 529

$t_{90}$ : Zeit in Minuten, bei der der Kautschuk zu 90 % vulkanisiert ist, Vulkametrie gemäß DIN 53 529

Delta t: $t_{90} - t_{10}$ in Minuten

F : Zugfestigkeit in MPa gemäß DIN 53 504

D : Bruchdehnung in % gemäß DIN 53 504

Modul : bei 200 % und 300 % Dehnung nach DIN 53 504

H : Shore A-Härte bei Raumtemperatur gemäß DIN 53 505

E : Rückprallelastizität bei Raumtemperatur gemäß ISO R 1767

Beispiel 3:

100 g Styrol mit 0,4 pphm DBCS wurden bei Raumtemperatur dem Tageslicht ausgesetzt. Nach 1 Tag, 2, 5, 10 und 25 Tagen wurde durch Fällung eines Aliquots in Methanol auf Polystyrol geprüft. Selbst nach 25 Tagen war gelchromatographisch kein Polystyrol nachweisbar.

Vergleichsbeispiel L:

100 g Styrol wurden bei Raumtemperatur dem Tageslicht ausgesetzt. Bereits nach 2 Tagen konnten von einem 1 g Aliquot 0,7 g Polystyrol gefällt werden.

**Patentansprüche**

**1.** Verfahren zum Desaktivieren von Radikalen, die vor oder während der radikalischen Polymerisation von Dienen und/oder vinylaromatischen Verbindungen und gegebenenfalls weiteren Comonomeren entstehen,
dadurch gekennzeichnet,
daß man der Reaktionsmischung zum Zeitpunkt des gewünschten Polymerisationsabbruches eine wirksame Menge einer aromatischen Hydroxydithiocarbonsäure oder deren Salz der allgemeinen Formel

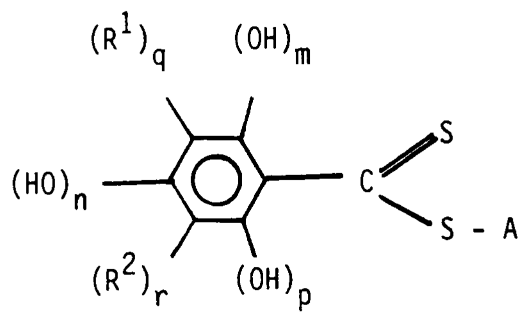

zusetzt, wobei n, m, p, q und r die Bedeutung von 0 oder 1 mit der Einschränkung haben, daß die Summe n + m + p mindestens den Wert 1 haben muß, $R^1$ und $R^2$ gleiche oder unterschiedliche Rest folgender Bedeutung sind

- Alkylrest mit 1 bis 10 C-Atomen
- Alkenylrest mit 1 bis 10 C-Atomen
- Aralkylrest mit bis zu 15 C-Atomen und

A die Bedeutung von Wassersoff, Ammonium oder vorzugsweise von Alkali hat.

**2.** Verfahren gemäß Anspruch 1,
dadurch gekennzeichnet,
daß es sich um eine radikalische Polymerisation in wäßriger Emulsion handelt.

**3.** Verfahren gemäß den Ansprüchen 1 und 2,
dadurch gekennzeichnet,
daß bei der radikalischen Polymerisation ein Monomergemisch, bestehend aus

- mehr als 10 Gew.-% Styrol
- 10 bis 90 Gew.% Butadien und

- bis zu 10 Gew.-% eines weiteren Comonomeren der allgemeinen Formel

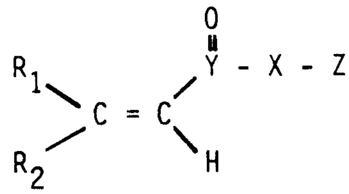

mit $R_1$, $R_2$ = H, $(CH_2)_n$-COOH und n = 0 - 2 sowie
Y = C oder S=O und
X = O und Z = H, Alkali oder
X = NH und Z = H
eingesetzt wird.

4. Verfahren gemäß Anspruch 3,
dadurch gekennzeichnet,
daß ein Monomergemisch, besteht aus
20 bis 40 Gew.-% Styrol und
80 bis 60 Gew.-% Butadien
eingesetzt wird.

5. Verfahren gemäß den Ansprüchen 1 bis 4,
dadurch gekennzeichnet,
daß man das Natriumsalz der Hydroxydithiocarbonsäure mit n = q = r = 1 und m = p = 0 einsetzt.

6. Verfahren gemäß Anspruch 5,
dadurch gekennzeichnet,
daß $R^1$ und $R^2$ Alkylreste, vorzugsweise tert.-Butylreste, sind.

7. Verfahren gemäß den Ansprüchen 5 und 6,
dadurch gekennzeichnet,
daß man das Abbruchmittel in Form einer 1 bis 10 %igen wäßrigen Lösung einsetzt.

**Claims**

1. A process for the deactivation of free radicals which are formed before or during the free radical polymerization of dienes and/or vinylaromatic compounds and if desired other comonomers, characterized in that an effective amount of an aromatic hydroxydithiocarboxylic acid or salt thereof, of the general formula

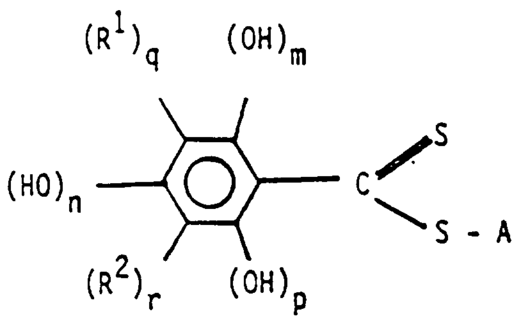

wherein n, m, p, q and r denote 0 or 1, with the limitation that the sum of n + m + p must at least have the value 1, $R^1$ and $R^2$ are identical or different radicals having the following meaning

- alkyl radical having 1 to 10 C atoms,
- alkenyl radical having 1 to 10 C atoms,

- aralkyl radical having up to 15 C atoms and

A denotes hydrogen, ammonium or, preferably, an alkali metal, is added to the reaction mixture at the time of the desired termination of the polymerization.

**2.** A process according to claim 1, characterized in that the polymerization is a free radical polymerization in an aqueous emulsion.

**3.** A process according to either of claims 1 and 2, characterized in that a monomer mixture composed of
- more than 10 % by weight of styrene,
- 10 to 90 % by weight of butadiene and
- up to 10 % by weight of another comonomer of the general formula

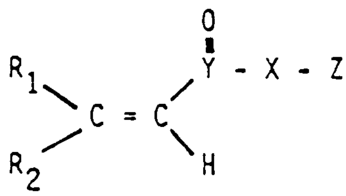

where $R_1$ and $R_2$ = H or $(CH_2)_n$-COOH and n = 0 - 2 and
Y = C or S=O and
X = O and Z = H or an alkali metal, or
X = NH and Z = H
is employed in the free radical polymerization.

**4.** A process according to claim 3, characterized in that a monomer mixture composed of 20 to 40 % by weight of styrene and 80 to 60 % by weight of butadiene is employed.

**5.** A process according to any of claims 1 to 4, characterized in that the sodium salt of the hydroxydithiocarboxylic acid where n = q = r = 1 and m = p = 0 is employed.

**6.** A process according to claim 5, characterized in that $R^1$ and $R^2$ are alkyl radicals, preferably tert-butyl radicals.

**7.** A process according to either of claims 5 and 6, characterized in that the terminating agent is employed in the form of a 1 to 10 % strength aqueous solution.

**Revendications**

**1.** Procédé pour désactiver des radicaux prenant naissance avant ou pendant la polymérisation radicalare des diènes et/ou de composés vinyl-aromatiques et éventuellement d'autres comonomères,
caractérisé par le fait que l'on ajoute au mélange réactionnel, au moment de l'interruption désirée de la polymérisation, une quantité active d'un acide hydroxy-dithiocarboxylique aromatique ou son sel de la formule générale

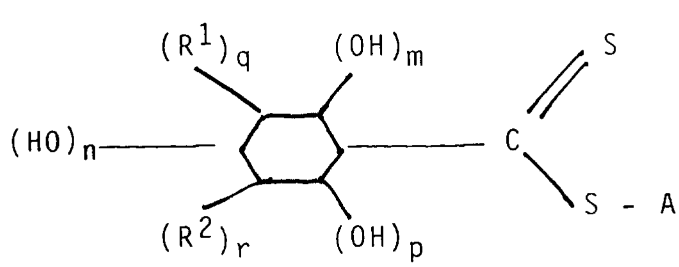
,

dans laquelle n, m, p, q et r sont égaux à zéro ou à 1 avec cette restriction que la somme m + n + doit au moins avoir la valeur 1, $R^1$ et $R^2$ sont des radicaux identiques ou différents représentant :
- un radical alkyle comportant de un à 10 atomes de carbone,

- un radical alcényle comportant de un à 10 atomes de carbone,
- un radical aralkyle comportant jusqu'à 15 atomes de carbone,

et A représente de l'hydrogène, de l'ammonium ou, de préférence, un alcali.

**2.** Procédé selon la revendication 1, caractérisé par le fait qu'il s'agit d'une polymérisation radicalaire en émulsion aqueuse.

**3.** Procédé selon les revendications 1 et 2, caractérisé par le fait que l'on utilise, lors de la polymérisation radicalaire, un mélange monomère constitué par :

- plus de 10 % en poids de styrène,
- de 10 à 90 % en poids de butadiène et
- jusqu'à 10 % en poids d'un autre comonomère de la formule générale

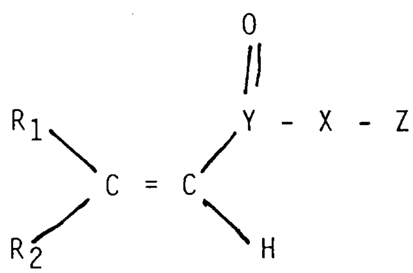

avec $R_1$, $R_2$ = H, $(CH_2)_n$-COOH et n = zéro à 2, ainsi que
X = C ou S=O, et
X = O et Z = H, alcali ou
X = NH et Z = H.

**4.** Procédé selon la revendication 3, caractérisé par le fait que l'on utilise un mélange monomère constitué par 20 à 40 % en poids de styrène et par 80 à 60 % en poids de butadiène.

**5.** Procédé selon les revendications 1 à 4, caractérisé par le fait que l'on utilise le sel de sodium de l'acide hydroxy-dithio-carboxylique avec n = q = r = 1 et m = p = zéro.

**6.** Procédé selon la revendication 5, caractérisé par le fait que $R^1$ et $R^2$ sont des radicaux alkyle, de préférence des radicaux tert.-butyle.

**7.** Procédé selon les revendications 5 et 6, caractérisé par le fait que l'on utilise l'agent d'interruption sous la forme d'une solution aqueuse à 1 - 10 %.